# EUROPÄISCHE PATENTSCHRIFT

(11) **EP 2 230 746 B1**
(45) Veröffentlichungstag und Bekanntmachung des Hinweises auf die Patenterteilung: **30.09.2020**
(21) Anmeldenummer: 09401037.8
(22) Anmeldetag: 10.11.2009
(51) Int. Cl.: H02K 1/20, H02K 9/04, H02K 1/32

(54) **Ständerkühlsystem für eine gehäuselose rotierende elektrische Maschine**
Stator cooling system for a rotating electric machine without a housing
Système de refroidissement d`un stator d`une machine électrique tournante sans carcasse

(30) Priorität: 10.11.2008 DE 102008037546; 08.09.2009 DE 102009043959
(43) Veröffentlichungstag der Anmeldung: 22.09.2010
(73) Patentinhaber: Antriebstechnik Katt Hessen GmbH, 34576 Homberg/Efze (DE)
(72) Erfinder: Langer, Uwe, 01257 Dresden (DE); Köhring, Pierre, 01309 Dresden (DE)
(74) Vertreter: Weissfloh, Ingo

(56) Entgegenhaltungen:
- WO-A1-03/012955
- DE-B3-102006 049 188
- GB-A- 262 808

## Beschreibung

Die Erfindung betrifft ein Ständerkühlsystem für eine gehäuselose rotierende elektrische Maschine, mit Durchzugskühlung mit einem Ständer- und Läuferblechpaket bestehend aus Teilblechpaketen, wobei die Teilblechpakete mit Leiteinrichtungs- und Abstandshaltersegmenten voneinander beabstandet sind und das Ständerblechpaket mit massiven Pressrahmen versehen ist, wobei axial über den Umfang verteilt Zu- und Abströmkanäle als axiale Kühlkanäle ausgebildet sind mit beidseitig angeordneten Fremdlüftern, insbesondere für Drehstrommaschinen.

Für bestimmte spezielle Anwendungsfälle, wie z. B. für Motorenprüfstände werden sehr hochdynamische Antriebe benötigt. Solcherart hochdynamische rotierende elektrische Maschinen sind elektrisch hochausgenutzte Elektromotoren, die auf Grund der realisierten hohen Leistungsdichte sich besonders schnell und intensiv erwärmen können. Hochausgenutzte rotierende elektrische Maschinen erfordern zudem eine Läuferkonstruktion mit möglichst geringem Durchmesser, die sich deshalb nur bedingt gut kühlen lässt. Deshalb ist es besonders wichtig, dass die aus dem Ständer stammende Wärme nicht noch zur Erwärmung des Läufers beiträgt. Die Realisierung einer solchen Maschinenausführung bedingt neben einer intensiven Kühlung des Läuferblechpaketes deshalb auch eine besonders optimale Kühlung des Ständerblechpaketes.

Es ist allgemein bekannt, dass eine intensive Luftkühlung des Läufer- und des Ständerblechpaketes mit Hilfe von axialen Kühlkanälen oder auch mit axialen und radialen Kühlkanälen erreicht werden kann. Dabei sind die Ständer- und Läuferblechpakete in der Regel aus mehreren Teilblechpaketen aufgebaut. Luftgekühlte Ausführungen sind in der EP 0 522 210 A1, der EP 0 118 802 A1 und der DE 43 20 559 A1 dargestellt. Diese Ausführungen haben allerdings den Nachteil, dass die axialen Kühlkanäle innerhalb des Läufers bestimmte axiale Strömungsquerschnitte benötigen, die einer Verkleinerung des Läuferdurchmessers entgegenstehen.

Eine weitere mögliche Lösung für eine intensive Kühlung einer hochausgenutzten rotierenden elektrischen Maschine besteht in der Anwendung der Flüssigkeitskühlung, z. B entsprechend EP 0 824 287 A1. Diese Lösung ist sehr aufwendig und kostenintensiv, weil komplizierte Dichtungselemente für die Realisierung der Flüssigkeitskühlung im rotierenden Läufer eingesetzt werden müssen. Zudem ist es allgemein anerkannt, dass jede Art von Flüssigkeitskühlung konstruktiv aufwendiger und kostenintensiver ist als eine Luftkühlung.

In einer anderen Schrift, der DE 198 24 202 C1, wird eine weitere aus Teilblechpaketen im Ständer und Läufer bestehende Maschine mit Flüssigkeitskühlung vorgeschlagen. Der wesentlichste Nachteil dieser Lösung ist allerdings darin zusehen, dass diese Kühlungsart nur in der konventionellen Einbaulage geeignet ist ihre Wirkung zu entfalten. Zudem führt diese vorgeschlagene Lösung zu einer ungleichmäßigen Kühlung über den gesamten Umfang des Läufer- und Ständerblechpaketes betrachtet. Problematisch ist hier insbesondere die Kühlung des sich drehenden Läufers, da die Flüssigkeit durch die Zentrifugalwirkung nach außen geschleudert wird. Zudem ist die hier beschriebene Ölkühlung durch die Masse des Kühlmediums weiter trägheitserhöhend.

In der DE 10 2004 013 133 A1 ist eine rotierende elektrische Maschine mit einem Maschinengehäuse und einem zylinderförmigen Blechpaket beschrieben, wo auch im Ständerblechpaket Kühlkanäle in axialer Richtung angeordnet sind und wobei auch eine über dem Umfang des Maschinengehäuses verteilte Kühlluftöffnung in der axialen Mitte des Maschinengehäuses angeordnet ist. Diese kann wahlweise zu einer mittigen Kühlluftabfuhr oder entgegengesetzt auch zu einer Kühlluftzufuhr benutzt werden. Eine intensive Kühlung sowohl des Ständerblechpaketes als auch des Läuferblechpaketes kann mit dieser Ausführung nicht erreicht werden. Hier wird lediglich eine Art verbesserte Oberflächenkühlung des Ständerblechpaketes beschrieben.

Ein intensives Kühlsystem für trägheitsarme rotierende elektrische Maschinen insbesondere für Drehstrommaschinen mit Fremd- oder Eigenkühlung ist in der DE 100 54 338 C2 aufgezeigt. Dabei sind sowohl das Läufer- als auch das quadratische Ständerblechpaket jeweils aus mehren Teilblechpaketen aufgebaut. An der Außenkontur eines quadratischen Ständerblechpaketes schließen sich nach außen über die gesamte Länge axial einseitig verschlossene Zu- und Abströmkammern über den Umfang verteilt mit etwa gleichem axialen Querschnitt an. Von einer Zuströmkammer führen radiale Kühlkanäle durch das Ständerblechpaket, die durch die Endbleche der Ständerteilblechpakete axial und durch Leiteinrichtungs- und Abstandshaltersegmente im Rückengebiet des Ständerblechpaketes radial begrenzt sind. Im Nutgebiet des Ständerblechpaketes stellt die Wicklung mit der Nutisolation die radiale Begrenzung dar. Im Bereich der Zähne der Ständerteilblechpakete kann die Kühlluft bis auf die Läuferoberfläche und in den Läufer strömen. Die Kühlluft wird durch die Rotation des Läufers zusätzlich verwirbelt, so dass eine intensive Kühlung erreicht wird. Die erwärmte Luft wird in die radial abströmend ausgeführten Kühlkanäle des Ständerblechpaketes gedrückt. Diese Kühlkanäle sind in gleicher Art und Weise, wie die Kühlkanäle, durch die die Luft einströmt, ausgebildet und sind mit den Abströmkammern verbunden. Dabei kühlt diese Luft das Ständerblechpaket ziemlich intensiv. In den Abströmkammern wird die Kühlluft dabei umgelenkt und strömt durch Öffnungen im Pressrahmen aus dem quadratischen Ständerblechpaket in den Wickelkopfraum und kühlt unter anderem zusätzlich noch die Wickelköpfe dieser rotierenden elektrischen Maschine. Allerdings beinhaltet diese technische Lösung einen relativ aufwendigen Blechschnitt. Zudem werden die magnetisch nicht aktiven aber thermisch empfindlichen Konstruktionsteile, wie insbesondere, die Maschinenlager zusätzlich erwärmt.

In der US 3 171 996 A ist ein Kühlsystem einer aus Teilblechpaketen bestehenden elektrischen Maschine mit Abstandshaltern zur Kühlluftverteilung gezeigt, wo die Kühlluft axial durch die Rotation des Läufers angesaugt wird und dann radial von innen nach außen durch den Läufer und den Ständer austritt. Diese Lösung ist allerdings für hochausgenutzte trägheitsarme rotierende elektrische Maschinen nicht geeignet, da der Läuferquerschnitt durch die axialen Kühlluftöffnungen größer gewählt werden muss, um eine bestimmte Menge magnetisch aktiven Materials im Läufer anzuordnen, was einer trägheitsarmen Ausführung entgegenwirkt. Außerdem beruht diese Lösung auf einer bewussten Ausnutzung von erheblichen Druckdifferenzen im Inneren dieser Maschine. Die Kühlluft wird dabei radial über im Gehäuse angeordnete Kühlluftöffnungen abgegeben.

Aus der DE 29 53 800 C2 ist eine elektrische Maschine mit einem massiven Rotor gezeigt, wobei nur das Ständerblechpaket aus Teilblechpaketen besteht und in den Teilblechpaketen sektorförmige Kühlkanäle angeordnet sind. Bei dieser technischen Lösung geht es darum, vor allem die Stirnräume dieser Maschine mit kalter nicht erwärmter Kühlluft intensiv zu kühlen. Hierzu sind unter anderem im Luftspalt zwischen Ständer und Läufer besondere, zylindrische Zwischenwände erforderlich, wodurch sich zwangsläufig der Luftspalt in der gesamten Maschine vergrößert, was wiederum die elektrische Ausnutzbarkeit weiter verringert. Eine gleichmäßige Kühlung ohne Entstehung eines Temperaturgefälles, über die Läuferlänge betrachtet, ist mit dieser Lösung allerdings nicht möglich. Des Weiteren ist eine Kühlung im Rotorinneren, in den kritischen Bereichen, wo die Verlustwärme bei einem hochausgenutzten Läufer insbesondere entsteht, nicht realisierbar.

Ein Aufbau einer elektrischen Maschine, wo sowohl das Ständer- als auch das Läuferblechpaket intensiv gekühlt werden kann, ist in der DE 103 17 593 A1 beschrieben. Diese Maschine besteht bei einer Ausführungsmöglichkeit aus mittig zweigeteilten Ständer- und Läuferblechpaketen und zentrischer axialer Luftabführung. Dabei kann allerdings der Läufer nicht besonders trägheitsarm und hochausnutzbar ausgebildet werden, da er mit axial durchgehenden Kühlkanälen ausgestattet ist, welche den elektromagnetisch aktiven Läuferquerschnitt unnötig schwächt.

Eine andere technische Lösung, in der sich auf dem Umfang eines Ständerblechpaketes im Gehäuse einer rotierenden elektrischen Maschine verteilt Abschnitte für die Zufuhr und Abfuhr des Kühlgases einander abwechseln, ist in der DE 23 18 090 B2 beschrieben. Dabei werden allerdings die axialen Zuführkanäle zur Kühlluftzufuhr aus einem System von gegenüber dem Ständerblechpaketrücken beabstandeten Rohren gebildet. Diese Rohre enden in geschlossenen Kammern, d. h. diese Kammern sind nach außerhalb des Ständerblechpaketes geschlossen ausgebildet. Nach innen sind die Kammern mit radialen Kühlschlitzen verbunden, die durch die Aufteilung des Ständerblechpakets in einzelne Teilblechpakete gebildet werden. Diese technische Ausführung erzeugt zwar eine gleichmäßige Temperaturverteilung im gesamten Ständerblechpaket ist aber konstruktiv sehr aufwendig und deshalb kostenintensiv. Zusätzlich wird die Kühlluft ebenfalls mit zur Wicklungskopfkühlung und zur Lagerkühlung mit genutzt.

In der DE 10 2006 049 188 A1 ist ein Kühlsystem für hochausgenutzte rotierende elektrische Maschinen, mit einem Ständer- und Läuferblechpaket bestehend aus Teilblechpaketen beschrieben. Dabei sollen das erwärmte Kühlmedium so schnell als möglich aus der Maschine abführt, eine konstante Temperaturverteilung gewährleistet und die Maschinenlager nicht zusätzlich erwärmt werden. Das Ständer- und Läuferblechpaket ist aus jeweils mehreren gleichlangen Teilblechpaketen aufgebaut. Die Teilblechpakete sind mit Leiteinrichtungs- und Abstandshaltersegmenten voneinander beabstandet angeordnet. Im Rücken des Ständerblechpaketes sind axiale Zuströmkanäle und axiale Abströmkanäle über den Radius verteilt eingebaut. Die Abströmkanäle sind beidseitig verschlossen ausgeführt. Die Anzahl der nach innen gerichteten Stege der Leiteinrichtungs- und Abstandshaltersegmente ist entsprechend der Anzahl der Zuströmkanäle und Abströmkanäle ausgebildet. Es sind Ständerteilblechpakete mit geschlossenen Kanälen mit Ständerteilblechpaketen mit offenen und geschlossenen Kanälen so kombiniert angeordnet, dass jeweils die geschlossenen Kanalabschnitte fortlaufend Zuströmkanäle und Abströmkanäle bilden. Bei Gehäuseausführung des Kühlsystems sind im Gehäuse an den Stellen des Ständerteilblechpaketes, wo sich die offenen Kanäle befinden, radiale Gehäuseausströmöffnungen angeordnet.

Der Erfindung liegt die Aufgabe zugrunde, ein intensives Ständerkühlsystem für eine gehäuselose rotierende elektrische Maschine, insbesondere für eine Drehstrommaschine mit Fremdkühlung zu schaffen, das das erwärmte Kühlmedium so schnell als möglich aus der Maschine abführt, eine konstante Temperaturverteilung über die gesamte Länge des Ständerblechpakets selbst bei extrem hohen Drehzahlen gewährleistet, wobei die magnetisch nicht aktiven, aber thermisch empfindlichen Konstruktionsteile, wie insbesondere die beiden Maschinenlager nicht zusätzlich erwärmt werden sollen und trotzt gehäuseloser Ausführung eine mechanisch sehr steife Ständerkonstruktion erreicht wird.

Die Aufgabe der Erfindung wird durch die Merkmale des 1. Patentanspruchs gelöst. Weitere zweckmäßige Ausgestaltungen der Erfindung sind Gegenstand der rückbezüglichen Unteransprüche. Anspruch 1 beschreibt die allgemeine erfinderische Lösung für ein Ständerkühlsystem für eine gehäuselose rotierende elektrische Maschine. Diese Ausführung ist für Fremdkühlung als Durchzugskühlung, nämlich für Drehstrommaschinen mit extrem hohen Drehzahlen mit einem Ständer- und Läuferblechpaket bestehend aus Teilblechpaketen TP realisierbar. Als Fremdkühlung sind hierbei zwei Gebläse G1 und G2 angeordnet, die das Kühlmedium, hier vorzugsweise Kühlluft, als rein axiale Kühlluftzufuhr jeweils auf beiden Seiten der Maschine bereitstellen. Die Gebläse G1 und G2 können dabei seitlich oder oberhalb der Maschine angeordnet sein. Die Teilblechpakete TP sind, wie an sich bekannt, mit Trenn- und Umlenkblechen TB voneinander beabstandet angeordnet, so dass zwischen zwei nebeneinander angeordneten Teilblechpaketen TP ein radialer nach außen geschlossener Spalt entsteht, d. h. es sind dadurch radiale Kühlkanäle RK ausgebildet, durch die das jeweils eingesetzte Kühlmedium nach Innen in Richtung Läuferblechpaket 5 strömen kann. Die äußere Form des Ständerblechpaketes 4, d. h. der Blechschnitt kann hierbei wahlweise quadratisch, rechteckig oder auch vieleckig sein. Außen am Ständerblechpaket 4 sind beidseitig massive, materialmäßig dicke, stabile Pressrahmen 1 angeordnet, die die einzelnen Ständerbleche des Ständerblechpakets 4 zusammenpressen und die für die mechanisch steife Konstruktion sorgen. Im Ständerblechpaket 4 sind axial über den Umfang verteilt, in Funktion als Zu- und Abströmkanäle axiale Kühlkanäle AK angeordnet. Das Ständerblechpaket 4 wird in einer Variante der erfindungsgemäßen Lösung durch beidseitig angeordnete, einteilige, massive Pressrahmen 1 zusammengehalten und mechanisch versteift. Die beiden Pressrahmen 1 werden mit den Einzelblechen des Ständerblechpaketes 4 mittels Pressbolzen gegeneinander fest verschraubt. Das Ständerblechpaket 4 ist zudem zusätzlich über seine Länge geschweißt ausgeführt. In diesen einteiligen massiven Pressrahmen 1 sind verteilt auf einer Kreisscheibe Aussparungen 2 zur Kühlluftzuführung vorgesehen. Diese Aussparungen 2 können sowohl radial nach innen zur Maschinenachse 6 hin offen oder auch nach Innen axial offen, d. h. dann axial gerade oder schräg durchgehend ausgebildet sein. Des Weiteren sind im massiven Pressrahmen 1 auf einer Kreisscheibe verteilt Umlenktaschen 3 zur Kühlluftabführung radial nach außen offen angeordnet. Diese können allerdings auch zur teilweisen oder vollständigen Kühlluftabführung axial nach außen offen angeordnet sein und zwar dann, wenn die Aussparungen 2 zur Kühlluftzuführung radial nach innen zur Maschinenachse 6 hin offen angeordnet und ausgebildet sind.

In einer anderen Variante der erfindungsgemäßen Lösung bestehen die beidseitigen Pressrahmen 1 aus mindestens je zwei einzelnen Rahmen R1 und R2. Diese sind dann entweder miteinander verschraubt oder verschweißt. Dabei sind in einem Rahmen R1 jeweils auf einer Kreisscheibe verteilt die nach Innen offenen Aussparungen 2 zur Kühlluftzuführung und die offenen Umlenktaschen 3 zur Kühlluftabführung radial nach außen angeordnet, während der andere Rahmen 2 diese Aussparungen 2 und Umlenktaschen 3 verschließt und abdichtet. Des Weiteren sind an diesem Rahmen 2 die Bohrungen zur Befestigung der Lagerschilde mit den zugehörigen Maschinenlagern eingebracht. Auch hier besteht in Abhängigkeit von der Richtung in die die Aussparungen 2 hin offen sind, die Möglichkeit zur teilweisen oder vollständigen Kühlluftabführung axial nach außen. Diese zweiteilige Ausführung der Pressrahmen ist aus fertigungstechnischen Gründen besonders vorteilhaft, weil sich die beiden Rahmen R1 und R2 mit mechanischen Fertigungsmethoden leichter und schneller und damit kostengünstiger herstellen lassen und nach dem Zusammenbau der beiden Rahmen R1 und R2 zum Pressrahmen trotzdem die erforderliche hohe Steifigkeit der gesamten Konstruktion der elektrischen Maschine ermöglichen.

Wie an sich bekannt sind zwischen den Teilblechpaketen TP radial nach innen wirkende Trenn- und Umlenkbleche TB angeordnet, die für die Umlenkung der Kühlluftströme zum einen zum Läuferblechpaket 5 hin und auch wieder von der Läuferoberfläche weg in diesen radialen Kühlkanälen RK zwischen den einzelnen Teilblechpaketen TP sorgen. Die Teilblechpakete TP sind durch die Trenn- und Umlenkbleche TB voneinander definiert beabstandet, so dass in Abhängigkeit von der Maschinengröße und der thermischen Belastung die Teilkühlströme innerhalb der rotierenden elektrischen Maschine definiert aufgeteilt und deren Strömungsrichtung gesteuert werden können. Die Umlenktaschen 3 sind zur Maschinenachse 6 hin radial vollständig geschlossen ausgebildet, damit keinerlei erwärmte, das Ständerblechpaket 4 verlassende Kühlluft in das Maschineninnere gelangen kann. Erfindungsgemäß sind in Abhängigkeit von der Maschinengröße die Aussparungen 2 zur Kühlluftzuführung und die Umlenktaschen 3 zur Kühlluftabführung wahlweise so groß ausgebildet, dass sie jeweils einen oder bei Bedarf gegebenenfalls auch mehrere axiale Kühlkanäle AK umfassen können. Die Aussparungen 2 zur Kühlluftzuführung und die Umlenktaschen 3 zur Kühlluftabführung sind verteilt im Pressrahmen 1 angeordnet. In der Maschinenmitte ist im Gegensatz zu allen anderen bislang bekannten anderen ähnlichen Ausführungen hier ein glattes einfaches durchgehendes Zwischenblech ZB zur Trennung der beiden Kühlluftströme angeordnet. Das Ständerkühlsystem ist damit praktisch in der Maschinenmitte geteilt. Idealerweise genau hälftig in zwei gleich große Teile. Durch die intensive Fremdkühlung mit den zwei Gebläsen G1 und G2 und die gesonderte erfindungsgemäße Kühlluftführung mittels der speziellen erfindungsgemäßen Pressrahmen 1 wird das erwärmte Kühlmedium, d. h. hier bevorzugt die warme Kühlluft sehr schnell aus dem Inneren der Maschine in Richtung der beiden Maschinenenden abgeführt. Dadurch wird sowohl das aktive Material des Ständerblechpaketes 4 und auch das des Läuferblechpaketes 5 in denen die Wärme entsteht sehr intensiv gekühlt. Gleichzeitig ermöglicht die erfindungsgemäße Kühlluftführung innerhalb der axialen Kühlkanäle in einer Art zweifach angeordnetem Gegenstromprinzip eine sehr konstante Temperaturverteilung über die gesamte Länge der gesamten rotierenden elektrischen Maschine. Von besonderem Vorteil ist es, dass die beiden Maschinenlager nur von frischer, gerade der elektrischen Maschine erst zugeführter, kühler Luft gekühlt werden, was bei extrem hohen Drehzahlen für die Lebensdauer der magnetisch nicht aktiven, aber thermisch empfindlichen Konstruktionsteile, wie insbesondere, die beiden Maschinenlager, sehr wichtig ist. Diese Art und Weise des erfindungsgemäßen Ständerkühlsystems bewirkt eine mechanisch sehr steife Ständerkonstruktion, die es ermöglicht, solcherart gehäuselose rotierende elektrische Maschinen auch für hochdynamische schnelllaufende Motorenprüfstände einzusetzen.

In einer bevorzugten Ausführung des erfindungsgemäßen Ständerkühlsystems sind in den beidseitigen massiven einteiligen Pressrahmen 1 oder in der anderen Variante in mehrteiliger Ausführung der Pressrahmen 1 aus mindestens zwei Rahmen R1 und R2 verteilt nur radial nach Innen offene Aussparungen 2 zur Kühlluftzuführung vorgesehen. Die verteilt angeordneten Umlenktaschen 3 zur Kühlluftabführung sind ihrerseits auch lediglich radial nach außen offen ausgebildet. Die Umlenktaschen 3 sind zur Maschinenachse 6 hin radial geschlossen ausgebildet. Die andere Konstruktion des Ständerblechpaketes 4 und die Kühlluftführung ist, wie bereits vorstehend beschrieben, ebenfalls identisch. Hierbei wird die in der Maschinenmitte axial zugeführte Kühlluft nach außen in die Aussparungen 2 gedrückt. Sie wird zunächst radial nach außen geführt und dann in den Aussparungen 2 wieder nach Innen in axiale Richtung umgelenkt. Sie strömt dann in den axialen Kühlkanälen, die als Zuführkanäle ausgebildet sind, im Inneren des Ständerblechpaketes in Richtung des Zwischenbleches ZW, d. h. zur Maschinenmitte hin. In den radialen Kühlkanälen RK zwischen den einzelnen Teilblechpaketen TP teilt sich der Kühlluftstrom auf und wird teilweise in Richtung der Maschinenachse 6 zum Läuferblechpaket 5 hin umgelenkt. Hier wird der Kühlluftstrom bis auf die Läuferoberfläche geführt, kühlt das Läuferblechpaket 5 und strömt wieder radial nach außen innerhalb der Kanäle der radialen Kühlkanäle RK, die in die axialen Kühlkanäle AK münden, die als Abführkanäle für die erwärmte Kühlluft ausgebildet sind. In diesen nach außen offenen axialen Kühlluftkanälen AK sammelt sich der erwärmte Kühlluftstrom aus den einzelnen radialen Kühlkanälen und wird nach außen in Richtung der Maschinenenden hin in die Umlenktaschen 3 zur Kühlluftabführung gedrückt. Hier sind die Umlenktaschen 3 zur Kühlluftabführung radial nach außen offen angeordnet. D. h. die nunmehr warme Kühlluft wird, nachdem sie die elektrische Maschine durchströmt hat, radial nach außen von der Oberfläche der gehäuselosen rotierenden elektrischen Maschine weg, ohne in Richtung der Lagerschilde und der Maschinenlager strömen zu können, weggeführt.

Es ist auch ein erfindungsgemäßer Pressrahmen 1 beim Ständerkühlsystem einsetzbar, bei dem nur ein oder auch beide Rahmen 1 oder 2 eines oder beider Pressrahmen 1 aus entsprechend geformten zwei oder mehreren gleich oder verschieden dicker Einzelblechen geschichtet sind. Der Vorteil dieser Ausführung liegt darin, dass dieser Pressrahmen 1 in sehr einfacher Art und Weise kostengünstig herzustellen ist, während bei einem einteiligen Pressrahm 1, dieser als Gussteil oder nur mit aufwendiger mechanischer Bearbeitung herzustellen ist.

Vorteilhaft kann das Ständerkühlsystem auch so ausgebildet sein, dass die Querschnitte der axialen Kühlkanäle AK symmetrisch auf einem Bereich eines äußeren Radius des Ständerblechpaketes 1 verteilt mit etwa gleichem axialen Querschnitt angeordnet sind. Dadurch lässt sich eine besonders gleichmäßige Strömungsführung der Kühlluft erreichen und zudem wird das Geräuschverhalten dieser Konstruktion verbessert. Hierbei stellt sich ebenfalls eine weitgehend gleichmäßige Temperaturverteilung im Inneren der elektrischen Maschine ein.

Bei bestimmten Achshöhen von rotierenden elektrischen Maschinen führt es zu besonderen Effekten, wenn beim erfindungsgemäßen Ständerkühlsystem die Aussparungen 2 zur Kühlluftzuführung im Pressrahmen 1 so groß dimensioniert und ausgebildet sind, dass diese mehrere nebeneinander liegende axiale Kühlkanäle AK des Standerblechpaketes 4 umfassen. Je nach Auslegung und Ausnutzung der elektrischen Maschine können die Umlenktaschen 3 zur Kühlluftabführung weniger oder die gleiche Anzahl oder mehr axiale Kühlkanäle als die, die Aussparungen 2 einschließen, umfassen.

Eine Regulierung bzw. eine sehr genaue Aufteilung der Kühlluftströme über die Länge des Ständerblechpaketes 4 ist möglich, wenn beim erfindungsgemäßen Ständerkühlsystem die Dicke der zwischen den einzelnen Teilblechpaketen TP des Ständerblechpaketes 4 angeordneten Trenn- und Umlenkbleche TB von den Maschinenenden her in Richtung zur Maschinenmitte hin zunimmt. Damit kann die Menge des über die radialen Kühlkanäle RK in den Zwischenräumen zwischen den Teilblechpaketen TP abströmenden Kühlluftstromes so eingestellt werden, dass in der Maschinenmitte, d. h. dort, wo die Maschine am wärmsten wird und auch am schlechtesten gekühlt werden kann, immer noch eine ausreichende Menge Kühlluft zur Kühlung zur Verfügung im Maschineninneren d. h. letztlich am Zwischenblech ankommt.

Aus Kostengründen kann es von Vorteil sein, wenn die Trenn- und Umlenkbleche TB in den Zwischenräumen zwischen den Teilblechpaketen TP aus einem oder mehreren gestanzten Distanzblechen oder aus einem einzelnen breiteren Formteil bestehen. Bei der Variante mit Einzelblechen lässt sich die Dicke der Trenn- und Umlenkbleche TB am leichtesten einstellen und variieren.

Für bestimmte Anwendungsfälle, wie z. B. bei bestimmten rechteckigen Querschnitten des Ständerblechpaketes 4 oder bei bestimmten Achshöhen ist es sinnvoll, dass der Querschnitt der axialen Kühlkanäle AK jeweils unterschiedlich groß ausgebildet ist, um eine gleichmäßige Kühlluftströmung erreichen zu können.

Ähnlich der Dimensionierung der Aussparungen 2 und der Umlenktaschen 3, bei der diese mehrere axiale Kühlluftkanäle umfassen, ist es auch möglich in einer anderen Ausbildung des erfindungsgemäßen Ständerkühlsystems, wenn die Aussparungen 2 zur Kühlluftzuführung im Pressrahmen 1 und die Umlenktaschen 3 im Querschnitt unterschiedlich groß ausgebildet sind, dass die Aussparungen 2, durch die die Kühlluft zu strömt, sich über eine andere Zahl von mehreren Nut- oder Zahnteilungen erstrecken, als die Umlenktaschen (3), durch die die Kühlluft abströmt.

Die Kühlluftführung in der Maschinenmitte kann optimiert werden, wenn das Zwischenblech ZB so dick dimensioniert ist, dass im Zwischenblech ZB zusätzliche Umlenknuten zur Kühlluftumkehr in die axialen Kühlkanäle AK angeordnet sind.

Grundsätzlich ist es auch möglich in den links und rechts vom Zwischenblech ZB angeordneten Teilblechpaketen TP im aktiven Blechmaterial Umlenknuten zur Kühlluftumkehr in die axialen Kühlkanäle AK anzuordnen.

Das Ständerkühlsystem kann auch so ausgeführt werden, dass das Zwischenblech ZB so dick dimensioniert ist, dass im Zwischenblech ZB zusätzlich radiale Öffnungen nach außen zum Maschinenmantel hin zur Kühlluftableitung angeordnet sind.

In einer anderen Ausführung können die zusätzlichen radialen Öffnungen auch in den links und rechts vom Zwischenblech angeordneten Teilblechpaketen TP, d. h. im aktiven Blechmaterial nach außen zum Maschinenmantel hin zur Kühlluftableitung angeordnet sein.

Es ist auch eine Variante denkbar, bei dem links und rechts vom Zwischenblech ZB unmittelbar anliegend je ein Trenn- und Umlenkblech TB angeordnet ist um deine optimierte Kühlluftführung und Kühlluftumkehr in der Maschinenmitte erreichen zu können.

Das erfindungsgemäße Ständerkühlsystem ermöglicht eine sehr intensive Kühlung auch des Läufers, obwohl es sich um eine gehäuselose rotierende elektrische Maschine handelt. Durch die Fremdkühlung dieser Art Drehstrommaschine kann das erwärmte Kühlmedium so schnell als möglich aus der Maschine abführt werden und es entsteht eine konstante Temperaturverteilung über die gesamte Länge des Ständerblechpakets selbst bei extrem hohen Drehzahlen. Im Ergebnis entsteht eine mechanisch sehr steife Ständerkonstruktion mit optimaler Kühlung der beiden Maschinenlager.

Das erfindungsgemäße Ständerkühlsystem für eine gehäuselose rotierende elektrische Maschine soll nachstehend in einem Ausführungsbeispiel an Hand der Figuren 1 bis 4 näher erläutert werden.
- Figur 1: zeigt das Schema der Kühlluftführung über die gesamte Länge einer Maschine
- Figur 2: zeigt eine Axialansicht des Querschnittes durch eine elektrische Maschine, die mit dem erfindungsgemäßen Ständerkühlsystem versehen ist (Schnitt A-A)
- Figur 3: zeigt eine geviertelte Axialansicht auf die beiden Rahmen R1 und R2 und die Draufsicht auf die Form eines Ständerblechpaketes 4 eines Läuferblechpaketes 5 und auf eine Gestaltungsform eines Trenn- und Umlenkbleches TB
- Figur 4: zeigt eine Radialansicht durch ein Maschinenende (Schnitt B-B und Schnitt C-C)

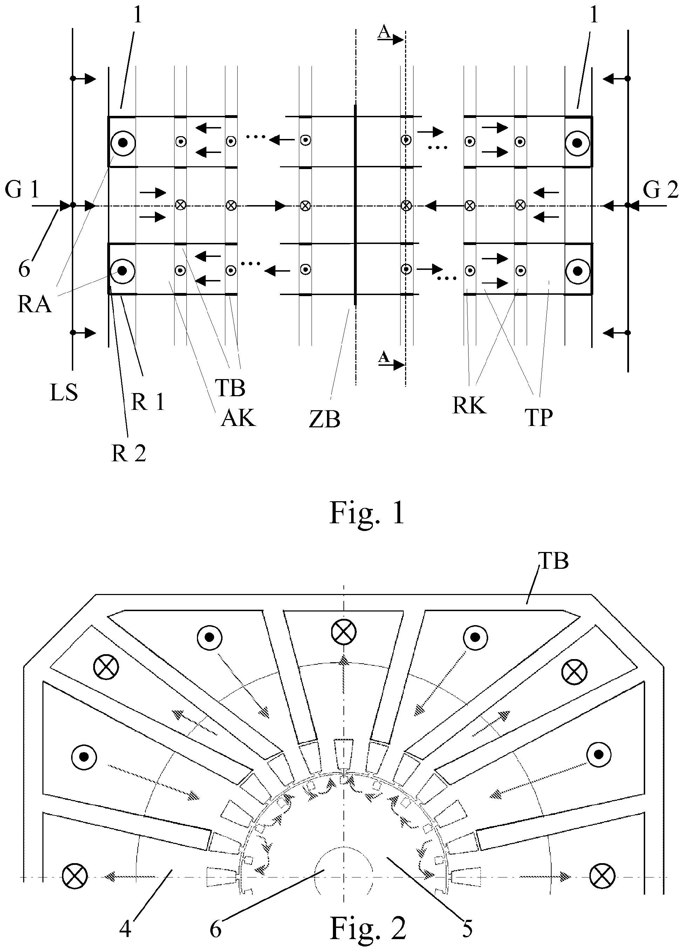

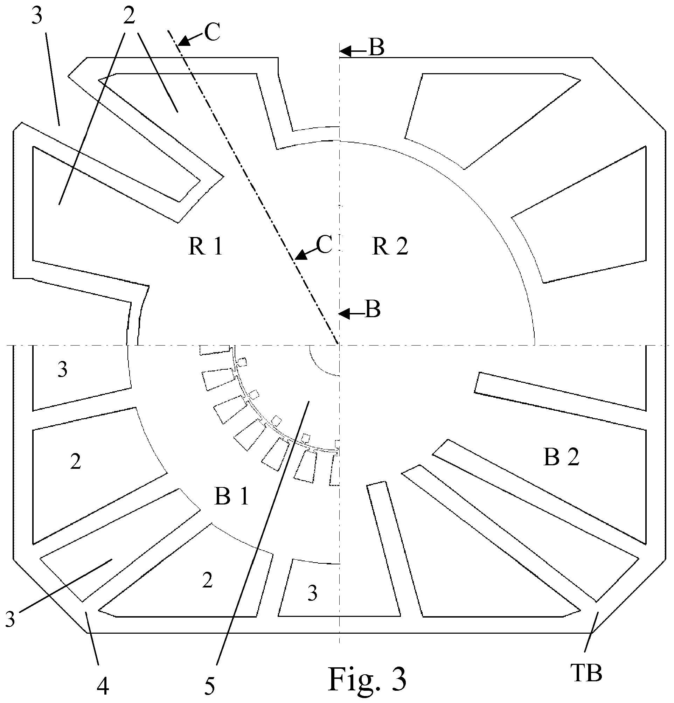

Das Schema der fremdbeaufschlagten Kühlluftführung als Durchzugskühlung über die gesamte Länge einer Maschine mit dem neuartigen Ständerkühlsystem ist in Figur 1 gezeigt. Es handelt sich hier um eine Drehstrommaschine mit extrem hohen Drehzahlen bei der das Ständer- und Läuferblechpaket hälftig aus zwei oder mehreren Teilblechpaketen TP besteht. Als Fremdkühlung sind hierbei zwei Gebläse G1 und G2 angeordnet, die das Kühlmedium, hier vorzugsweise Kühlluft, als rein axiale Kühlluftzufuhr jeweils auf beiden Seiten der Maschine bereitstellen. Die Gebläse G1 und G2 können dabei seitlich oder auch oberhalb der Maschine angeordnet sein. Vor den Pressrahmen 1, der hier aus zwei Teilen, den Rahmen R1 und R2 besteht sind links und rechts axial zwei Luftsammelräume LS angeordnet. Die Teilblechpakete TP sind, wie an sich bekannt, mit Trenn- und Umlenkblechen TB voneinander beabstandet angeordnet, so dass zwischen zwei nebeneinander angeordneten Teilblechpaketen TP ein radialer nach außen geschlossener Spalt entsteht, d. h. es sind dadurch radiale Kühlkanäle RK ausgebildet, durch die das jeweils eingesetzte Kühlmedium nach innen in Richtung Läuferblechpaket 5 strömen kann. Die äußere Form des Ständerblechpaketes 4, d. h. der Blechschnitt ist hierbei nahezu quadratisch mit abgeschnittenen Ecken, so dass das Ständerblechpaket achteckig ausgebildet ist. Außen am Ständerblechpaket 4 sind beidseitig massive, materialmäßig dicke, stabile Rahmen R1 und R2 angeordnet, die die einzelnen Ständerbleche des Ständerblechpakets 4 zusammenpressen und welche gegeneinander in üblicher Art und Weise mittels Pressbolzen (nicht gezeichnet) verschraubt sind. Die einzelnen Bleche des Ständerblechpakets 4 sind zusätzlich miteinander mit Schweißnähten verschweißt (nicht gezeichnet), wodurch eine mechanisch steife Konstruktion entsteht. Im Ständerblechpaket 4 sind axial über den Umfang verteilt, in Funktion als Zu- und Abströmkanäle axiale Kühlkanäle AK angeordnet. Im direkt auf den Ständerblechen sitzenden Rahmen R1 sind verteilt auf einer Kreisscheibe Aussparungen 2 zur Kühlluftzuführung vorgesehen. Diese Aussparungen 2 sind radial nach Innen zur Maschinenachse 6 hin offen. Des Weiteren sind im Rahmen R1 auf einer Kreisscheibe verteilt Umlenktaschen 3 zur Kühlluftabführung radial nach außen offen angeordnet. Die Form und Gestaltung des Rahmens R1 ist aus der Figur 3 ersichtlich. Hier ist auch die Form und Gestaltung des Rahmens R2 zu erkennen. Der Rahmen R2 des Pressrahmens 1 sitzt weiter außen auf dem Rahmen R1 und dichtet die Umlenktaschen 3 zur Kühlluftabführung axial ab. Dies bewirkt, dass die Kühlluft radial über den Umfang verteilt im Bereich des Rahmens R1 die gehäuselose Maschine verlässt. Im Rahmen R2 sind die Aussparungen 2 zur Kühlluftzuführung gleich groß ausgebildet, wie die Aussparungen 2 zur Kühlluftzuführung im Rahmen R1, so dass die Kühlluft aus dem Luftsammelraum durch die beiden deckungsgleichen Aussparungen 2 der beiden Rahmen R1 und R2 in das Innere der Maschine strömen kann. In der Figur 3, welche eine geviertelte Axialansicht auf die beiden Rahmen R1 und R2 und die Draufsicht B1 mit der dazugehörige Form eines entsprechenden Ständerblechpaketes 4 und eines Läuferblechpaketes 5 zeigt, ist auch die Gestaltungsform B2 eines erfindungsgemäßen Trenn- und Umlenkbleches TB zu sehen. Durch die Ausführung der Rahmen R1 und R2 entstehen abwechselnd Zuströmkanäle und Abströmkanäle für die Kühlluftführung im Inneren des Ständerblechpaketes 4. In Figur 2 ist eine Axialansicht des Querschnittes durch eine elektrische Maschine, die mit dem erfindungsgemäßen Ständerkühlsystem versehen ist (Schnitt A-A) gezeigt. An Hand dieser Figur 2 kann man die Strömungsverhältnisse im Bereich zwischen den Teilblechpaketen TP, d. h. im Bereich der Trenn- und Umlenkbleche TB erkennen. Der Verlauf der Kühlluftströmung ist hier jeweils mit geraden Pfeilen im Bereich des Ständerblechpaketes 4 und mit kleinen Pfeilen im Bereich des Läuferblechpaketes 5 dargestellt. Die Luftführung verläuft auf der A Seite wie aus den Figuren 1 und 2 ersichtlich wie folgt:
- Zuführung axial mittels Gebläse G1 der A Seite in den Luftsammelraum LS der A Seite und umströmen und kühlen der Wickelköpfe WK, sowohl des Ständers als auch des Läufers
- weiter axial durch die Aussparungen 2 zur Kühlluftzuführung durch den Rahmen R2 und R1
- weiter durch axiale Kühlkanäle AK als Zuströmkanäle in den einzelnen Teilblechpaketen TP
- bis in das letzte Teilblechpaket TB vor dem Zwischenblech ZB in der Maschinenmitte
- dabei wird jeweils ein Teil des zugeführten Kühlluftstromes in den Zwischenräumen zwischen den einzelnen Teilblechpaketen TP bedingt durch die Trenn- und Umlenkbleche TB nach innen zur Maschinenmitte durch die radialen Kühlkanäle RK auf die Läuferoberfläche des Lauferblechpaketes 5 radial umgelenkt, d. h. der Kühlluftstrom teilt sich in einzelne radiale Teilkühlluftströme auf und kühlt dabei einen Teil der Ständerwicklung
- die radial nach innen gerichteten Teilkühlluftströme werden in die Zwischenräume zwischen die Teilblechpakete des Läuferblechpakets 5 gedrückt, umströmen die in das Läuferblechpaket eingelegte Wicklung im Läufer, werden durch die Läuferdrehung beschleunigt, umgelenkt und radial durch die radialen Kühlkanäle RK nach außen gedrückt
- die teilerwärmten Teilluftströme strömen nun in die nach außen führenden freien radialen Kühlkanäle RK und kühlen dabei den anderen Teil der Ständerwicklung
- die radial nach außen strömenden erwärmten Teilkühlluftströme werden zwischen den Teilblechpaketen TP bedingt durch die Trenn- und Umlenkbleche TB in die freien axialen Kühlkanäle AK, die hier als Abströmkanäle wirken, nach außen axial zur A Seite gerichtet umgelenkt und strömen über die radialen Ausströmkanäle RA radial aus der Maschine im Rahmen R1 aus.

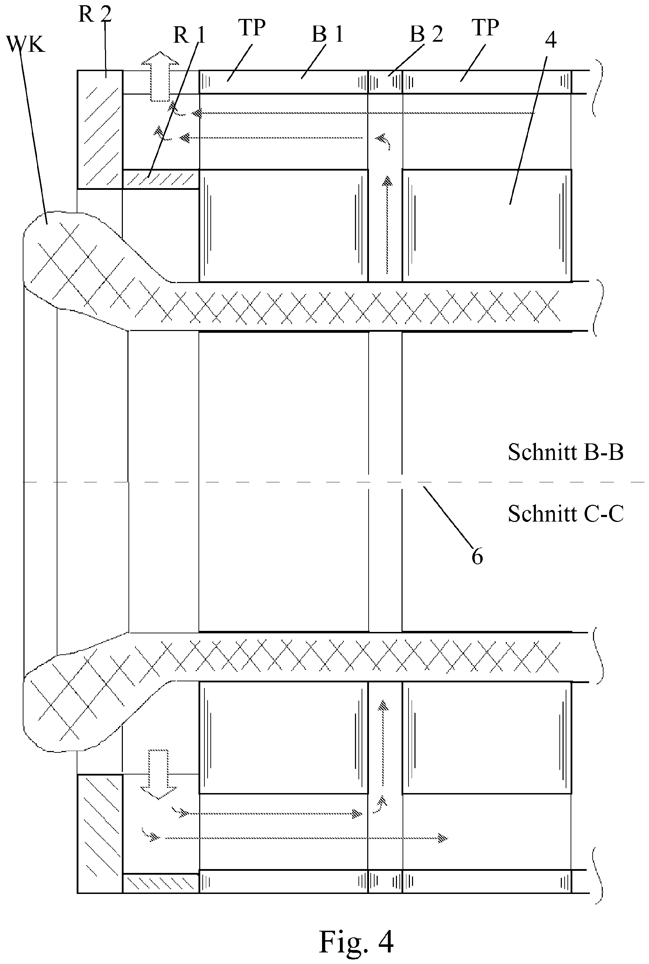

In Figur 4 ist noch einmal der Übersicht halber eine Radialansicht durch ein Maschinenende (Schnitt B-B und Schnitt C-C) dargestellt, die den Verlauf der Kühlluftströmung im Ständerblechpaket 4 zwischen zwei Teilblechpaketen TP veranschaulicht. Unten in der Figur 4 ist die Kühlluftzuführung durch einen axialen Kühlkanal AK über einen Zuführkanal und oben ist die Kühlluftabführung über einen unmittelbar benachbarten axialen Kühlkanal, der als Abführkanal wirkt, gezeigt.

Der wesentliche Vorteil des erfindungsgemäßen Ständerkühlsystems ermöglicht neben der sehr intensiven Kühlung des Läufers und seiner Wicklung auch eine optimale Kühlung der beiden in den Figuren nicht dargestellten hoch beanspruchten Maschinenlager, da diese zuerst jeweils von der axial zugeführten Kühlluft umströmt und gekühlt werden. Bei dieser Lösung bildet sich im aktiven Lastbetrieb eine sehr konstante und gleichmäßige Temperatur über die gesamte Maschinenlänge heraus. Die Maschine kann durch diese hälftige Kühlung bei dieser neuartigen Konstruktion besonders lang gebaut werden. Dieses erfindungsgemäße Ständerkühlsystem ist anwendbar für gehäuselose rotierende elektrische Drehstrommaschinen mit sehr hohen Drehzahlen und sehr geringem Trägheitsmoment des Läufers.

### Bezugszeichenliste

- 1: Pressrahmen
- 2: Aussparungen zur Kühlluftzuführung
- 3: Umlenktaschen zur Kühlluftabführung
- 4: Ständerblechpaket
- 5: Läuferblechpaket
- 6: Maschinenachse
- AK: axialer Kühlkanal
- B1: Blechpaket 1
- B2: Blechpaket 2
- G1: Gebläse A Seite
- G2: Gebläse B Seite
- LS: Luftsammelraum
- R1: Rahmen 1
- R2: Rahmen 2
- RA: Radiale Ausströmkanäle
- RK: Radiale Kühlkanäle
- TB: Trenn- und Umlenkbleche
- TP: Teilblechpakete
- WK: Wickelkopf
- ZB: Zwischenblech

## Patentansprüche

1. Gehäuselose rotierende elektrische Maschine mit einem Ständerkühlsystem,
mit Durchzugskühlung, mit einem Ständerblechpaket (4) bestehend aus mindestens zwei Teilblechpaketen (TP) und außen am Ständerblechpaket (4) angeordneten massiven Pressrahmen (1) und axial über den Umfang verteilten als Zu- und Abströmkanäle ausgebildeten Kühlkanälen im Ständerblechpaket (4), mit einem Läuferblechpaket (5) bestehend aus Teilblechpaketen (TP) mit Zwischenräumen in das die Wicklung im Läufer eingelegt ist, so dass im Betrieb die radial nach Innen gerichteten Teilkühlluftströme in die Zwischenräume zwischen die Teilblechpakete (TP) des Läuferblechpaketes (5) gedrückt werden, die in das Läuferblechpaket (5) eingelegte Wicklung im Läufer umströmen, durch die Läuferdrehung beschleunigt werden, umgelenkt und radial durch die radialen Kühlkanäle, die durch die Trenn- und Umlenkbleche (TB) zwischen den Teilblechpakten (TP) gebildet sind nach außen gedrückt werden, und beidseitiger axialer Kühlluftzuführung über gesonderte Gebläse (G1 und G2), wobei in der Maschinenmitte ein durchgehendes Zwischenblech (ZB) angeordnet ist,
**dadurch gekennzeichnet,**
**dass** beidseitig massive einteilige Pressrahmen (1) ausgebildet und angeordnet sind,
in denen verteilt nach Innen offene Aussparungen (2) zur Kühlluftzuführung vorgesehen sind, im massiven Pressrahmen (1) verteilt offene Umlenktaschen (3) zur Kühlluftabführung radial nach außen und/oder zur teilweisen oder vollständigen Kühlluftabführung axial nach außen angeordnet sind,
oder beidseitig mehrteilige Pressrahmen (1) aus mindestens zwei einzelnen Rahmen (R1 und R2) angeordnet sind,
in denen verteilt nach Innen offene Aussparungen (2) zur Kühlluftzuführung und offene Umlenktaschen (3) zur Kühlluftabführung radial nach außen und/oder zur teilweisen oder vollständigen Kühlluftabführung axial nach außen angeordnet sind,
zwischen den Teilblechpaketen (TP) radial nach innen wirkende Trenn- und Umlenkbleche (TB) angeordnet sind,
die Teilblechpakete (TP) durch die Trenn- und Umlenkbleche (TB) voneinander definiert beabstandet angeordnet sind,
die Umlenktaschen (3) zur Maschinenachse (6) hin radial geschlossen ausgebildet sind,
die Aussparungen (2) zur Kühlluftzuführung und die Umlenktaschen (3) zur Kühlluftabführung so groß ausgebildet sind, dass sie jeweils einen oder mehrere axiale Kühlkanäle (AK) des Ständerblechpaketes (4) umfassen,
die Aussparungen (2) zur Kühlluftzuführung und die Umlenktaschen (3) zur Kühlluftabführung verteilt im Pressrahmen (1) angeordnet sind.

2. Ständerkühlsystem nach Anspruch 1,
**dadurch gekennzeichnet**,
in den einteiligen Pressrahmen (1) verteilt radial nach Innen offene Aussparungen (2) zur Kühlluftzuführung vorgesehen sind, im massiven Pressrahmen (1) verteilt offene Umlenktaschen (3) zur Kühlluftabführung radial nach außen angeordnet sind,
oder die beidseitigen Pressrahmen (1) aus mindestens zwei einzelnen Rahmen (R1 und R2) bestehen,
in denen verteilt radial nach Innen offene Aussparungen (2) zur Kühlluftzuführung und offene Umlenktaschen (3) zur Kühlluftabführung radial nach außen angeordnet sind,
die Aussparungen (2) zur Kühlluftzuführung und die Umlenktaschen (3) zur Kühlluftabführung abwechselnd verteilt im Pressrahmen (1) angeordnet sind.

3. Ständerkühlsystem nach Anspruch 1 oder 2,
**dadurch gekennzeichnet,**
**dass** ein oder beide Rahmen (R1 oder R2) der Pressrahmen (1) aus entsprechend geformten Einzelblechen geschichtet sind.

4. Ständerkühlsystem nach Anspruch 1 oder 2,
**dadurch gekennzeichnet,**
**dass** die Querschnitte der axialen Kühlkanäle (AK) symmetrisch auf einem Bereich eines äußeren Radius des Ständerblechpaketes (4) verteilt mit etwa gleichem axialen Querschnitt angeordnet sind.

5. Ständerkühlsystem nach Anspruch 1, 2 oder 4,
**dadurch gekennzeichnet,**
**dass** die Aussparungen (2) zur Kühlluftzuführung im Pressrahmen (1) so groß dimensioniert und ausgebildet sind, dass diese mehrere nebeneinander liegende axiale Kühlkanäle (AK) des Ständerblechpaketes (4) umfassen, wobei die Umlenktaschen (3) zur Kühlluftabführung weniger oder die gleiche Anzahl oder mehr axiale Kühlkanäle (AK) umfassen.

6. Ständerkühlsystem nach Anspruch 1 oder 2,
**dadurch gekennzeichnet,**
**dass** die Dicke der zwischen den Teilblechpaketen (TP) angeordneten Trenn- und Umlenkbleche (TB) von den Ständerblechpaketenden her in Richtung zur Ständerblechpaketmitte hin zunimmt.

7. Ständerkühlsystem nach Anspruch 1, 2 oder 6,
**dadurch gekennzeichnet,**
**dass** die Trenn- und Umlenkbleche (TB) in den Zwischenräumen zwischen den Teilblechpaketen (TP) aus einem oder mehreren gestanzten Distanzblechen oder aus einem einzelnen breiteren Formteil bestehen.

8. Ständerkühlsystem nach Anspruch 1, 2, 4 oder 5,
**dadurch gekennzeichnet,**
**dass** der Querschnitt der axialen Kühlkanäle (AK) unterschiedlich groß ausgebildet ist.

9. Ständerkühlsystem nach Anspruch 1 oder 2,
**dadurch gekennzeichnet,**
**dass** die Aussparungen (2) zur Kühlluftzuführung im Pressrahmen (1) und die Umlenktaschen (3) im Querschnitt unterschiedlich groß ausgebildet sind,
wobei die Aussparungen (2), durch die die Kühlluft zuströmt, sich über eine andere Zahl von mehreren Nut- oder Zahnteilungen erstrecken, als die Umlenktaschen (3), durch die die Kühlluft abströmt.

10. Ständerkühlsystem nach Anspruch 1 oder 2,
**dadurch gekennzeichnet,**
**dass** das Zwischenblech (ZB) so dick dimensioniert ist, dass im Zwischenblech (ZB) zusätzliche Umlenknuten zur Kühlluftumkehr in die axialen Kühlkanäle (AK) angeordnet sind.

11. Ständerkühlsystem nach Anspruch 1 oder 2,
**dadurch gekennzeichnet,**
**dass** in den links und rechts vom Zwischenblech (ZB) angeordneten Teilblechpaketen (TP) im aktiven Blechmaterial Umlenknuten zur Kühlluftumkehr in die axialen Kühlkanäle (AK) angeordnet sind.

12. Ständerkühlsystem nach Anspruch 1 oder 2,
**dadurch gekennzeichnet,**
**dass** das Zwischenblech (ZB) so dick dimensioniert ist, dass im Zwischenblech (ZB) zusätzlich radiale Öffnungen nach außen zum Maschinenmantel hin zur Kühlluftableitung angeordnet sind.

13. Ständerkühlsystem nach Anspruch 1 oder 2,
**dadurch gekennzeichnet,**
**dass** in den links und rechts vom Zwischenblech (ZB) angeordneten Teilblechpaketen (TP) im aktiven Blechmaterial radiale Öffnungen nach außen zum Maschinenmantel hin zur Kühlluftableitung angeordnet sind.

14. Ständerkühlsystem nach Anspruch 1 oder 2,
**dadurch gekennzeichnet,**
**dass** links und rechts vom Zwischenblech (ZB) unmittelbar anliegend je ein Trenn- und Umlenkblech (TB) angeordnet ist.

## Claims

1. Housing-less rotating electric machine with a stator cooling system, with draught cooling, with a stator lamination stack (4) consisting of at least two lamination sub-stacks (TP) and solid clamping frames (1) arranged on the outside of the stator lamination stack (4) and cooling ducts formed as inflow and outflow ducts in the stator lamination stack (4) and axially distributed over the circumference, with a rotor lamination stack (5) consisting of lamination sub-stacks (TP) having interspaces, in which stack the winding is inserted in the rotor such that during operation the radially inwardly directed partial cooling air flows are pushed into the interspaces between the sub-stacks (TP) of the rotor lamination stack (5), flow around the winding inserted in the rotor lamination stack (5) of the rotor, are accelerated by the rotor rotation, are deflected and pushed radially outwards through the radial cooling ducts formed by the separation and deflection sheets (TB) between the lamination sub-stacks (TP), and with axial cooling air inflow on both sides via separate fans (G1 and G2), wherein a continuous intermediate sheet (ZB) is arranged in the centre of the machine,
**characterized in that**
solid single-piece clamping frames (1) are formed and arranged on both sides, provided with inwardly open recesses (2) for cooling air inflow, open deflection pockets (3) are distributed in the solid clamping frame (1) in a radially outward arrangement for cooling air outflow and/or in an axially outward arrangement for partial or full cooling air outflow, or multi-piece clamping frames (1) of at least two individual frames (R1 and R2) are arranged on both sides, in which inwardly open recesses (2) are distributed for cooling air inflow and open deflection pockets (3) are distributed in a radially outward arrangement for cooling air outflow and/or in an axially outward arrangement for partial or full cooling air outflow, separation and deflection sheets (TB) acting radially inwards are arranged between the lamination sub-stacks (TP), the lamination sub-stacks (TP) are arranged at a defined spacing from each other by the separation and deflection sheets (TB), the deflection pockets (3) are radially closed towards the machine axis (6), the recesses (2) for cooling air inflow and the deflection pockets (3) for cooling air outflow are each sized to encompass one or more axial cooling ducts (AK) of the stator lamination stack (4), the recesses (2) for cooling air inflow and the deflection pockets (3) for cooling air outflow are arranged in a distributed manner in the clamping frame (1).

2. Stator cooling system according to claim 1,
**characterized in that**
radially inwardly open recesses (2) are distributed in the single-piece clamping frames (1) for cooling air inflow, open deflection pockets (3) are distributed in the solid clamping frame (1) in a radially outward arrangement for cooling air outflow, or the clamping frames (1) on both sides consist of at least two individual frames (R1 and R2) in which open recesses (2) for cooling air inflow are distributed in a radially inward arrangement and open deflection pockets (3) for cooling air outflow are distributed in a radially outward arrangement, the recesses (2) for cooling air inflow and the deflection pockets (3) for cooling air outflow are alternatingly distributed on the clamping frame (1).

3. Stator cooling system according to claim 1 or 2,
**characterized in that**
one or both frames (R1 or R2) of the clamping frames (1) are stacked from appropriately formed individual sheets.

4. Stator cooling system according to claim 1 or 2,
**characterized in that**
the cross-sections of the axial cooling ducts (AK) are arranged in a symmetrical distribution in a region of an outer radius of the stator lamination stack (4) and have about the same axial cross-section.

5. Stator cooling system according to claim 1, 2 or 4,
**characterized in that**
the recesses (2) for cooling air inflow are dimensioned and formed on the clamping frame (1) in such a size that they encompass several juxtaposed axial cooling ducts (AK) of the stator lamination stack (4), wherein the deflection pockets (3) for cooling air outflow encompass less or the same number or more axial cooling ducts (AK).

6. Stator cooling system according to claim 1 or 2,
**characterized in that**
the thickness of the separation and deflection sheets (TB) arranged between the lamination sub-stacks (TP) increases from the stator lamination stack ends towards the stator lamination stack centre.

7. Stator cooling system according to claim 1, 2 or 6,
**characterized in that**
separation and deflection sheets (TB) arranged in the interspaces between the lamination sub-stacks (TP) consist of one or more stamped spacing sheets or of a single wider moulded part.

8. Stator cooling system according to claim 1, 2, 4 or 5,
**characterized in that**
the cross-sections of the axial cooling ducts (AK) are formed to be of different sizes.

9. Stator cooling system according to claim 1 or 2,
**characterized in that**
the recesses (2) for cooling air inflow in the clamping frame (1) and the deflection pockets (3) are formed to be of different sizes in cross-section,
wherein the recesses (2) through which the cooling air flows in extend over a number of several slot or tooth spacings different from that of the deflection pockets (3) through which the cooling air flows out.

10. Stator cooling system according to claim 1 or 2,
**characterized in that**
the intermediate sheet (ZB) is dimensioned in thickness such that the intermediate sheet (ZB) has additional deflection grooves to deflect cooling air into the axial cooling ducts (AK).

11. Stator cooling system according to claim 1 or 2,
**characterized in that**
in the lamination sub-stacks (TP) arranged to the left and right of the intermediate sheet (ZB), deflection grooves are arranged in the active sheet material for reversing the cooling air into the axial cooling ducts (AK).

12. Stator cooling system according to claim 1 or 2,
**characterized in that**
the intermediate sheet (ZB) is dimensioned in thickness such that radially outward openings are additionally arranged in the intermediate sheet (ZB) towards the machine casing for cooling air outflow.

13. Stator cooling system according to claim 1 or 2,
**characterized in that**
in the lamination sub-stacks (TP) arranged to the left and right of the intermediate sheet (ZB), radial openings are arranged in the active sheet material outwards to the machine casing for cooling air outflow.

14. Stator cooling system according to claim 1 or 2,
**characterized in that**
a separation and deflection sheet (TB) is arranged directly adjacent to the left and right of the intermediate sheet (ZB).

## Revendications

1. Machine électrique rotative sans boîtier, avec un système de refroidissement statorique, avec un refroidissement par courant d'air, avec un paquet de tôles statoriques (4) constitué d'au moins deux paquets partiels de tôles (TP) ainsi que de cadres de serrage (1) massifs disposés à l'extérieur du paquet de tôles statoriques (4) et de conduits de refroidissement dans le paquet de tôles statoriques (4) distribués axialement sur la circonférence en tant que conduits d'admission et d'écoulement, avec un paquet de tôles rotoriques (5), constitué de paquets partiels de tôles (TP) ménageant des espaces intermédiaires, et dans lequel l'enroulement est inséré dans le rotor de manière à ce que, lors du fonctionnement, les courants d'air partiels de refroidissement orientés radialement vers l'intérieur soient poussés dans les espaces intermédiaires entre les paquets partiels de tôles (TP) du paquet de tôles rotoriques (5), transitent autour de l'enroulement inséré dans le paquet de tôles rotoriques (5), puis soient accélérés par la rotation du rotor, déviés et expulsés radialement vers l'extérieur à travers les conduits de refroidissement radiaux formés par les tôles séparatrices et déflectrices (TB) entre les paquets partiels de tôles (TP), et avec une admission axiale d'air de refroidissement sur les deux côtés par des ventilateurs séparés (G1 et G2), une tôle intermédiaire (ZB) continue étant disposée au centre de la machine,
**caractérisé en ce que**
des cadres de serrage (1) monoblocs massifs sont formés et disposés sur les deux côtés, dans lesquels des retraits (2) ouverts vers l'intérieur sont distribués pour l'admission d'air de refroidissement, des poches déflectrices (3) étant disposées dans le cadre de serrage (1) massif selon une distribution radiale vers l'extérieur pour l'écoulement d'air de refroidissement et/ou disposées selon une distribution axiale vers l'extérieur pour l'écoulement partiel ou complet d'air de refroidissement, ou bien que, sur les deux côtés, sont disposés des cadres de serrage (1) multi-pièces composés d'au moins deux cadres individuels (R1 et R2), dans lesquels sont distribués des retraits (2) ouverts vers l'intérieur pour l'admission d'air de refroidissement et des poches déflectrices (3) ouvertes pour l'écoulement d'air de refroidissement sont disposés selon une distribution radiale vers l'extérieur et/ou disposés selon une distribution axiale vers l'extérieur pour l'écoulement partiel ou complet d'air de refroidissement, que des tôles séparatrices et déflectrices (TB) agissant radialement vers l'intérieur sont disposées entre les paquets partiels de tôles (TP), que les paquets partiels de tôles (TP) sont disposés suivant un espacement défini les uns par rapport aux autres par les tôles séparatrices et déflectrices (TB), que les poches déflectrices (3) sont radialement closes vers l'axe (6) de la machine, que les retraits (2) pour l'admission d'air de refroidissement et les poches déflectrices (3) pour l'écoulement d'air de refroidissement sont dimensionnés de telle façon qu'ils comprennent un ou plusieurs conduits de refroidissement (AK) du paquet de tôles statoriques (4), que les retraits (2) pour l'admission d'air de refroidissement et les poches déflectrices (3) pour l'écoulement d'air de refroidissement sont distribués dans le cadre de serrage (1).

2. Système de refroidissement statorique selon la revendication 1,
**caractérisé en ce que**
dans les cadres de serrage (1) monoblocs, des retraits (2) ouverts vers l'intérieur sont disposés selon une distribution radiale pour l'admission d'air de refroidissement, des poches déflectrices (3) ouvertes sont disposées dans le cadre de serrage (1) massif selon une distribution radiale vers l'extérieur pour l'écoulement d'air de refroidissement, ou encore que les cadres de serrage (1) sur les deux côtés sont composés d'au moins deux cadres individuels (R1 et R2), dans lesquels sont disposés des retraits (2) ouverts vers l'intérieur selon une distribution radiale pour l'admission d'air de refroidissement et des poches déflectrices (3) ouvertes sont disposées selon une distribution radiale vers l'extérieur pour l'écoulement d'air de refroidissement, et que les retraits (2) pour l'admission d'air de refroidissement et les poches déflectrices (3) pour l'écoulement d'air de refroidissement sont disposés dans le cadre de serrage (1) en alternance.

3. Système de refroidissement statorique selon la revendication 1 ou 2,
**caractérisé en ce que**
un ou les deux cadres (R1 ou R2) des cadres de serrage (1) sont constitués d'empilements de tôles individuelles d'une forme appropriée.

4. Système de refroidissement statorique selon la revendication 1 ou 2,
**caractérisé en ce que**
les sections transversales des conduits de refroidissement (AK) axiaux sont disposées selon une distribution symétrique dans la zone d'un rayon extérieur du paquet de tôles statoriques (4) avec à peu près la même section axiale.

5. Système de refroidissement statorique selon la revendication 1, 2 ou 4,
**caractérisé en ce que**
les retraits (2) pour l'admission d'air de refroidissement dans le cadre de serrage (1) sont dimensionnés et formés de manière que ceux-ci comprennent plusieurs conduits de refroidissement (AK) axiaux juxtaposés dans le paquet de tôles statoriques (4), les poches déflectrices (3) pour l'écoulement d'air de refroidissement comprenant moins, plus, ou encore le même nombre de conduits de refroidissement (AK) axiaux.

6. Système de refroidissement statorique selon la revendication 1 ou 2,
**caractérisé en ce que**
l'épaisseur des tôles séparatrices et déflectrices (TB) disposés entre les paquets partiels de tôles (TP) augmente à partir des extrémités du paquet de tôles statoriques vers le centre du paquet de tôles statoriques.

7. Système de refroidissement statorique selon la revendication 1, 2 ou 6,
**caractérisé en ce que**
les tôles séparatrices et déflectrices (TB) dans les espaces intermédiaires entre les paquets partiels de tôles (TP) consistent en une ou plusieurs tôles d'espacement estampées ou d'une seule pièce moulée plus large.

8. Système de refroidissement du stator selon la revendication 1, 2, 4 ou 5,
**caractérisé en ce que**
les conduits de refroidissement (AK) axiaux présentent des sections transversales d'une taille différente.

9. Système de refroidissement statorique selon la revendication 1 ou 2,
**caractérisé en ce que**
les retraits (2) pour l'admission d'air de refroidissement dans le cadre de serrage (1) et les poches déflectrices (3) présentent des sections transversales d'une taille différente,
les retraits (2) par lesquels l'air de refroidissement est amené, s'étendant sur un nombre différent de plusieurs divisions d'encoches et de dents que les poches déflectrices (3) par lesquelles s'écoule l'air de refroidissement.

10. Système de refroidissement statorique selon la revendication 1 ou 2,
**caractérisé en ce que**
la tôle intermédiaire (ZB) est dimensionnée de manière si épaisse que des rainures déflectrices additionnelles sont disposées dans la tôle intermédiaire (ZB) pour le renversement de l'air de refroidissement vers les conduits de refroidissement (AK) axiaux.

11. Système de refroidissement statorique selon la revendication 1 ou 2,
**caractérisé en ce que**
dans les paquets partiels de tôles (TP) disposés à gauche et à droite de la tôle intermédiaire (ZB), des rainures déflectrices sont disposées dans le matériau de tôle actif pour le renversement de l'air de refroidissement vers les conduits de refroidissement (AK) axiaux.

12. Système de refroidissement statorique selon la revendication 1 ou 2,
**caractérisé en ce que**
la tôle intermédiaire (ZB) est dimensionnée de manière si épaisse que des ouvertures radiales sont additionnellement disposées vers l'extérieur en direction de l'enveloppe de la machine pour l'écoulement de l'air de refroidissement.

13. Système de refroidissement statorique selon la revendication 1 ou 2,
**caractérisé en ce que**
dans les paquets partiels de tôles (TP) disposés à gauche et à droite de la tôle intermédiaire (ZB), des ouvertures radiales sont disposées en direction de l'extérieur vers l'enveloppe de la machine pour l'écoulement de l'air de refroidissement.

14. Système de refroidissement statorique selon la revendication 1 ou 2,
**caractérisé en ce que**
à gauche et à droite de la tôle intermédiaire, une tôle séparatrice et déflectrice (TB) est disposée de façon à lui être directement adjacente.
